# EUROPEAN PATENT APPLICATION

(11) **EP 4 454 904 A1**
(43) Date of publication of application: **30.10.2024**
(21) Application number: 22911835.1
(22) Date of filing: 20.12.2022
(51) Int. Cl.: B60C 11/12

(54) **PNEUMATIC TIRE**

(30) Priority: 21.12.2021 KR 20210184210
(71) Applicant: HANKOOK TIRE & TECHNOLOGY CO., LTD, Gyeonggi-do 13494 (KR)
(72) Inventor: NHO, Jin Gyu, Daejeon 34127 (KR); KIM, Hee Kyung, Daejeon 34127 (KR)
(74) Representative: karo IP
(86) International application number: PCT/KR2022/020780
(87) International publication number: WO 2023/121202

(57) **Abstract**

The present invention relates to a pneumatic tire consisting of a plurality of tread blocks partitioned by a plurality of longitudinal grooves and a plurality of transverse grooves intersecting the longitudinal grooves, wherein, on the surface of the tread blocks, one or more two-in-one kerfs are formed, which are composed of a pair of transverse kerfs starting from both outer walls which face each other and are at the same height in the circumferential direction of the tire, are bent at a certain point, diverge and extend at a predetermined distance apart, and terminate within the blocks. According to the present invention, both an improvement in performance on icy road surfaces and an improvement in performance on dry and wet road surfaces, which are in a trade-off relationship with each other, may be achieved.

## Description

### [Technical Field]

The present invention relates to a pneumatic tire, and more specifically, to a pneumatic tire whose performance on ice and dry and wet road surfaces can be improved by forming a plurality of transverse kerfs extending in a width direction of the tire on a tread block.

### [Background Art]

Various technologies related to tires that improve traveling performance on ice or snowy road surfaces by improving the edge effect of a tire have been developed in the related art. For example, by forming transverse kerfs extending in a width direction of a tire on a plurality of blocks extending in a circumferential direction and width direction of the tire, it is possible to improve driving performance on ice or snowy road surfaces through the water curtain removal effect or edge effect.

However, in such conventional tires, a plurality of transverse kerfs are formed in tread blocks, and the tread blocks are divided by the transverse kerfs, and thus the rigidity of the block is degraded, causing easy deformation of the block. Therefore, upon traveling, small blocks of the tread block partitioned by the transverse kerf are deformed, causing the kerf to collapse. Therefore, there is a problem that frictional force due to friction with the road surface is reduced and a phenomenon in which a leading portion on which the tire proceeds is rolled in occurs, thereby degrading traveling performance of the tire, particularly, driving stability or acceleration and braking performance.

Therefore, as a method of improving performance on snow or ice without causing the degradation of the rigidity of the block of the tire, for example, Japanese Patent Application Laid-Open No. 2001-39126 proposes a method of forming kerfs having a small depth with respect to a kerf in a width direction of the tire and intersecting each other separately from the kerf in the width direction of the tire. However, since the block is partitioned into small blocks by forming the intersecting kerfs, there is a limit that the effect of increasing the rigidity of the block is not very significant.

Meanwhile, Japanese Patent Application Laid-Open No. 2003-237320 discloses a tire that suppresses deformation of small blocks by forming adjacent small blocks having different heights with respect to the small blocks partitioned by open kerfs formed to be open with respect to main grooves and alternately offsetting the depth of the kerf. However, in such a technology, since the blocks having different heights are formed, there is a problem that the ground contact pressure of the higher block is increased, thereby degrading wear resistance. Therefore, even in such a technology, there is a limit in that the effect of increasing the rigidity of the block is insignificant.

### [Disclosure]

### [Related Art Documents]

(Patent Document 1) Japanese Patent Application Laid-Open No. 2001-39126
(Patent Document 2) Japanese Patent Application Laid-Open No. 2003-237320

### [Technical Problem]

The present invention is to solve the above problems of the related art and is directed to solving the above problems of the related art and to providing a pneumatic tire capable of maintaining performance thereof on ice while simultaneously improving performance thereof on dry and wet road surfaces through increased the rigidity of a block.

Objects of the present invention are not limited to the above-described object, and other objects that are not described will be able to be clearly understood by those skilled in the art to which the present invention pertains from the following description.

### [Technical Solution]

One aspect of the present invention for achieving the object relates to a pneumatic tire including a plurality of tread blocks partitioned by a plurality of longitudinal grooves and a plurality of transverse grooves intersecting the longitudinal grooves, wherein one or more two-in-one kerfs including a pair of transverse kerfs are formed on a surface of the tread block, and the transverse kerfs start from two outer walls opposite to each other at the same height in a circumferential direction of the tire, are bent at predetermined points, are branched off with a predetermined separation interval and extend, and terminate in a block.

The transverse kerfs constituting the two-in-one kerf may include starting portions extending to a predetermined length from the outer wall, inclined portions formed to be inclined at a predetermined inclined angle with respect to the start portions, and branched portions extending linearly from the inclined portions, and the inclined angle (α) between the starting portion and the inclined portion may be in the range of 90 to 150°.

The branched portions of the transverse kerfs may be formed as linear or non-linear kerfs and, when formed as the non-linear kerf, formed in various shapes such as zigzag, waver, and sinusoidal shapes.

Thicknesses of the transverse kerfs constituting the two-in-one kerf may be the same or different, and the thickness may be in the range of 0.2 mm to 1.2 mm.

Depths of the transverse kerfs may be in the range of 3 mm to 10 mm.

A void portion in which a cross-sectional area of a pore is locally expanded may be formed in an end portion of the two-in-one kerf in a depth direction or an end portion terminated in the block.

An interval between the transverse kerfs constituting the two-in-one kerf may be in the range of 10 to 50 mm, and a length of the branched portion may be in the range of 10% to 70% of a total length of the corresponding block in a width direction.

In the present invention, the two-in-one kerfs may be formed as 1 to 10 two-in-one kerfs per block.

The pneumatic tire according to the present invention may further include an area in which a plurality of wave-shaped transverse kerfs are formed on a surface of the block excluding an area in which the two-in-one kerf is formed in one block.

When the two-in-one kerf and the wave-shaped kerf are formed together in one tread block, the two-in-one kerf and the wave-shaped kerf may be formed to be inclined with respect to each other in the block so that an angle therebetween is in the range of 3° to 70°. A distance between the two-in-one kerf and the wave-shaped kerf may be a length in the range of 10% to 90% of a length of the block in a circumferential direction of the tire.

### [Advantageous Effects]

According to the present invention, by forming a plurality of transverse kerfs in a width direction of a tire on a tread block of the tire, it is possible to improve braking and driving performance on an icy road surface by the water curtain removal effect or edge effect. Additionally, by securing the connectivity between blocks with a two-in-one kerf, it is possible to minimize the weakening of the rigidity of the block, thereby improving performance on dry and wet road surfaces.

In addition, it is difficult to reconcile both a grip on an icy road and a grip on a snowy road, which are in a trade-off relationship with each other. However, according to the present invention, it is possible to minimize the trade-off in performance on snow, thereby improving performance on the icy road.

### [Description of Drawings]

FIG. 1 is a schematic plan view of a tread pattern of a pneumatic tire according to one embodiment of the present invention.
FIG. 2 is a partial enlarged plan view showing a tread surface of the pneumatic tire according to one embodiment of the present invention.
FIGS. 3A to 3C are enlarged perspective views schematically showing a two-in-one kerf formed on a surface of a tread block of the pneumatic tire according to one embodiment of the present invention.
FIGS. 4A and 4B are enlarged perspective views schematically showing a two-in-one kerf formed on a surface of a tread block of a pneumatic tire according to another embodiment of the present invention.

### [Modes of the Invention]

Hereinafter, the present invention will be described in detail with reference to the accompanying drawings. To clearly describe the present invention, parts irrelevant to the description have been omitted from the drawings, and throughout the specification, similar parts have been denoted by similar reference numerals.

Throughout the specification, when a first component is described as being "connected to (joined to, in contact with, or coupled to)" a second component, it includes not only a case in which the first component is "directly connected" to the second component, but also a case in which the first component is "indirectly connected" to the second component with a third component interposed therebetween.

The singular expression used herein includes the plural expression unless the context clearly dictates otherwise. In the present specification, it should be understood that the term "comprise" or "have" is intended to specify that a feature, a number, a step, an operation, a component, a part, or a combination thereof described in the specification is present, but do not preclude the possibility of the presence or addition of one or more other features, numbers, steps, operations, components, parts, or combinations thereof.

The term "circumferential direction" used herein refers to a direction following when a tire rolls or rotates and refers to a direction perpendicular to a rotational axis of the tire, and the circumferential direction is also referred to as a longitudinal direction.

The term "width direction" used herein refers to a direction parallel to the rotational axis of the tire as the tire rolls along a ground surface. The width direction has the same meaning as "transverse direction" or "horizontal direction."

The term "kerf" used herein refers to any narrow and long groove or cutting portion disposed in a tread. Such a kerf includes a pair of opposing outer walls extending in a depth direction in the tread.

The tread "block" used herein refers to a protruding element defined by a groove and refers to a portion having a ground contact surface in contact with the ground during traveling of a vehicle on which a tire is mounted and side walls at both sides of the ground contact surface.

The term "wave-shaped kerf" used herein refers to a kerf in the width direction of the tire, which has a shape such as a zigzag, wave, or sinusoidal shape, and the shape of the kerf is not limited to the above shape and has the meaning encompassing all non-linear kerfs of any other shape.

The term "same height in the circumferential direction of the tire" used herein has the meaning including a case where locations of starting portions extending from starting points of respective transverse kerfs on outer wall of a tread block are disposed at the same height in the circumferential direction of the tire and a case where the locations are located to be slightly misaligned with each other in the circumferential direction of the tire within 5% of a gap between branched portions.

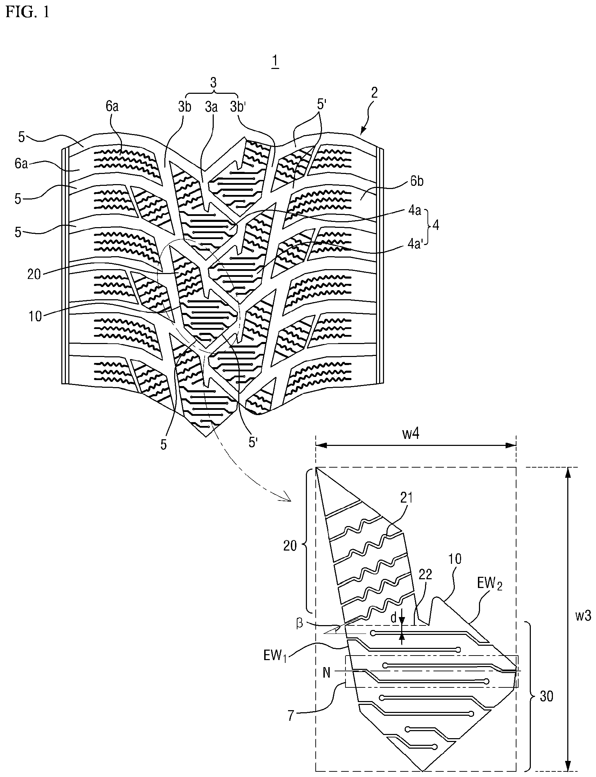

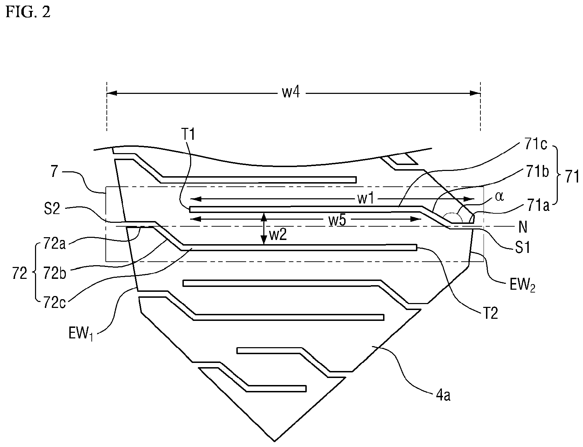

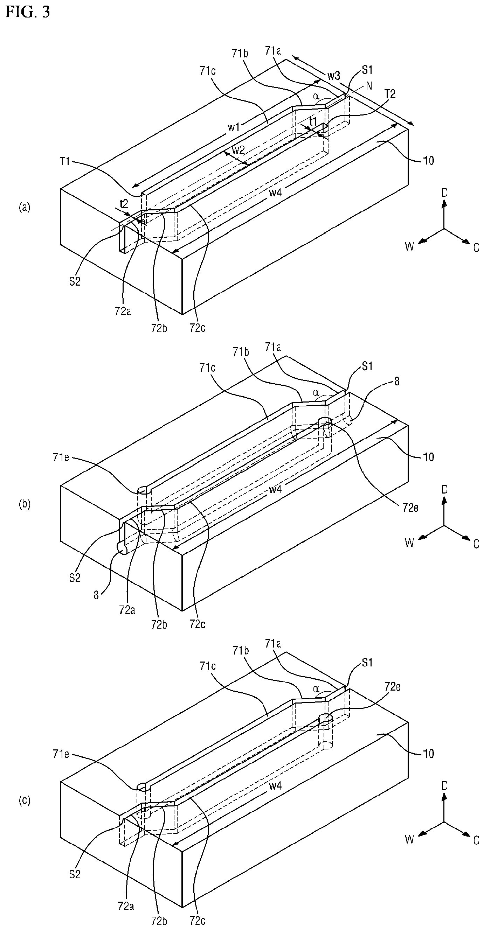

FIG. 1 is a schematic plan view of a tread pattern of a pneumatic tire according to one embodiment of the present invention, FIG. 2 is a partial enlarged plan view showing a tread surface of the pneumatic tire according to one embodiment of the present invention, and FIGS. 3A to 3C are enlarged perspective views schematically showing a two-in-one kerf formed on a surface of a tread block of the pneumatic tire according to one embodiment of the present invention.

Referring to FIG. 1, the pneumatic tire according to one embodiment of the present invention includes a plurality of tread blocks 10 partitioned by a plurality of longitudinal grooves 3a, 3b, and 3b' and a plurality of transverse grooves 5 and 5' intersecting the longitudinal grooves, in which one or more two-in-one kerfs 7 are formed on a surface of the tread block, in which the two-in-on kerf 7 includes a pair of transverse kerfs 71 and 72 which are bent at predetermined points starting from two outer walls EW₁ and EW₂ opposite to each other and having the same height N in the circumferential direction of the tire, extend by being branched off with a predetermined separation interval, and terminate in the block.

The transverse kerfs 71 and 72 constituting the two-in-one kerf 7 are formed alternately so that end points T1 and T2 terminated within the block are located at opposite sides in the width direction of the tire. For example, the end point T1 of a branched portion 71c of the transverse kerf 71 may be formed at a location close to a point at which a branched portion 72c of the transverse kerf 72 starts, and the end point T2 of the branched portion 72c of the transverse kerf 72 may be formed at a location close to a point at which the branched portion 71c of the transverse kerf 71 starts. Since the outer wall in the circumferential direction of the block is greatly deformed compared to a central portion thereof, when a kerf having one side terminated in the block is formed, heel-end-toe wear can be suppressed, thereby increasing durability.

The transverse kerfs 71 and 72 include starting portions 71a and 72a starting to extend from starting points S 1 and S2 on the outer wall of the block, inclined portions 71b and 72b formed to be inclined at a predetermined inclined angle with respect to the starting portions, and the branched portions 71c and 72c connected to the inclined portions and formed to face each other with a predetermined separation interval in the circumferential direction of the tire. The two-in-one kerf 7 increases a braking force by evenly inducing a ground contact pressure upon traveling straight and especially improves straight stability on the icy road surface. In addition, the pneumatic tire according to the present invention, which has a tread pattern formed as the two-in-one kerf according to the present invention can improve braking performance on the icy road surface and increase durability on the dry and wet road surfaces by reinforcing the rigidity of the block of the tire in the transverse direction.

The starting portions 71a and 72a of the transverse kerfs 71 and 72 of the two-in-one kerf 7 starting to extend from the starting points S 1 and S2 on the outer walls of the block start at the same height from the two outer walls EW₁ and EW₂, which are opposite to each other, of the pair of transverse kerfs 71 and 72. Here, the term "same height N in the circumferential direction of the tire" has the meaning including a case where the starting points of the starting portions 71a and 72a of the pair of the transverse kerfs 71 and 72 are disposed at the same height in the circumferential direction of the tire and a case where the start points at the two outer walls EW₁ and EW₂ opposite to each other are located to be slightly misaligned with each other in the circumferential direction of the tire in the range within 5% of an interval w2 between the branched portions 71c and 72c.

Since the inclined portions 71b and 72b may be formed at an inclined angle α, the inclined angle α between the starting portions 71a and 72a and the inclined portions 71b and 72b of each transverse kerf may be in the range of 90° to 150°. When the inclined angle is smaller than 90°, there is a concern that an edge component of the tire in an axial direction may be degraded, and conversely, when the inclined angle exceeds 150°, there is a concern that drainage performance and performance on ice may be worsen due to an increase in drainage resistance or snow discharge resistance of the longitudinal grooves 3a, 3b, and 3b'. Therefore, the inclined angles α between the starting portions 71a and 72a and the inclined portions 71b and 72b of the transverse kerf are preferably 90° or more and smaller than 150°.

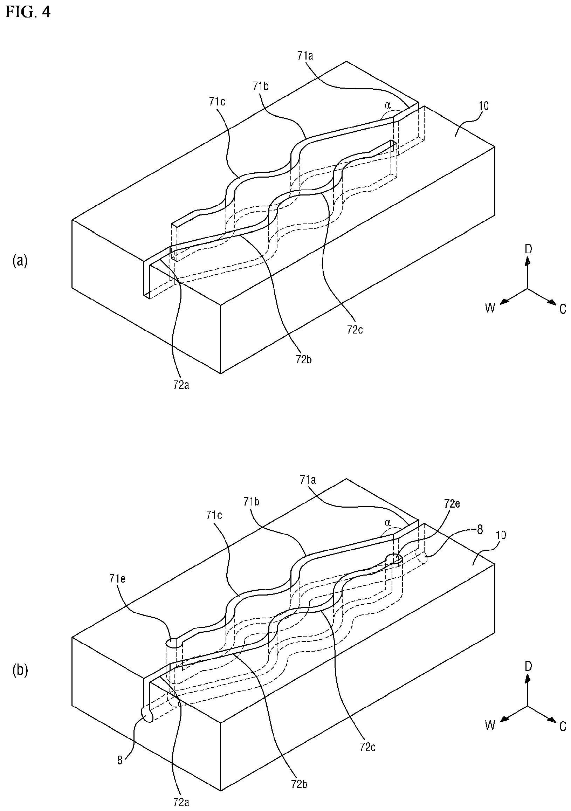

The branched portions 71c and 72c of the transverse kerf may be formed as a linear or non-linear kerf. Shapes of the branched portions 71c and 72c of the transverse kerf in a plan view do not need to be linear as in the embodiment of FIGS. 3A to C and may be a wavy, zigzag or sinusoidal shape as in the embodiment of FIGS. 4A and B. When the branched portions 71c and 72c of the transverse kerf are formed in a wave shape, an edge component of the tire in the circumferential direction is included, and thus it is possible to further improve turning performance on an icy road surface.

In addition, as shown in FIGS. 3 and 4, a shape of the kerf of the two-in-one kerf 7 in the depth direction may be formed in a three-dimensional kerf structure that extends in a wave shape in the depth direction of the kerf in addition to being formed in a shape extending linearly, a wave shape, or a wave shape in the width direction of the tire.

For both the two-in-one kerf and the wave-shaped kerf, the depth of the kerf is preferably in the range of 50% to 90% of the depths of the longitudinal grooves 3a, 3b, and 3b'. When the depth of the kerf is too small in the case of the depth smaller than 50%, the performance on ice may be lost in the final stage of wear, making it impossible to maintain the performance on ice over a long time, and when the depth of the kerf exceeds 90%, since the depths of the longitudinal grooves 3a, 3b, and 3b' and the depth of the kerf are almost identical, stress may be concentrated at the bottom of the kerf, causing the occurrence of cracks. The depths of the transverse kerfs 71 and 72 constituting the two-in-one kerf 7 may preferably be in the range of 3 mm to 10 mm.

Thicknesses t1 and t2 of the transverse kerfs 71 and 72, which are formed alternately to allow the end points T1 and T2 of the branched portions 71c and 72c to be disposed at opposite sides in the width direction of the tire, in the width direction of the tire may be the same or different, and the thicknesses t1 and t2 may be in the range of 0.2 mm to 1.2 mm. It is preferable that the end points T1 and T2 of the branched portions 71c and 72c, which terminate in the tread block, are formed as close as possible to points at which the inclined portions 71b and 72b start to be bent.

At the end points T1 and T2 of the branched portions 71c and 72c of the transverse kerfs 71 and 72 constituting the two-in-one kerf 7, void portions 71e and 72e in which a cross-sectional area of a pore in a cross-sectional view is expanded locally may be formed. In addition, a void portion 8 may also be formed in end portions of the kerfs of the transverse kerfs 71 and 72 in the depth direction. Shapes of the void portions 71e and 72e and the void portion 8 are not particularly limited and may have various shapes such as circular, oval, and drop-shaped shapes.

The void portions 71e and 72e formed in the tread surface contribute to preventing uneven deformation of the tread blocks along the transverse kerfs 71 and 72 disposed on the ground contact surface. That is, when a braking force or friction force is applied to the tread block, the transverse kerfs are opened substantially in parallel and mainly opened over the entirety of the length of the transverse kerf, and thus ground contact performance is significantly improved compared to the conventional kerf. Moreover, the void portions 71e and 72e can maintain rigidity based on an uncut portion of the block without causing uneven wear, increase the friction force on the icy road surface, and increase a braking force on the wet road surface.

An interval W2 between the branched portions 71c and 72c of the transverse kerfs 71 and 72 constituting the two-in-one kerf 7 may be in the range of 2 to 8 mm. When the interval W2 between the branched portions 71c and 72c exceeds 8 mm, there is a concern that the edge effect is degraded by an increase in the opening of the branched portion of the transverse kerf by the rotation of the tire, and conversely, when the interval W2 between the branched portions 71c and 72c is smaller than 2 mm, the opening of the kerfs 71 and 72 may become excessively small, making it difficult to sufficiently obtain the edge effect on the icy road surface.

Lengths W5 of the branched portions 71c and 72c may be in the range of 10% to 70% of a total length W4 of the tread block in the width direction of the tire. In the present invention, for a length W3 of the tread block in the circumferential direction of the tire and the length W4 of the tread block in the width direction of the tire, as shown in the enlarged view of FIG. 1, when a quadrangular shape surrounding the tread block according to the present invention is given, lengths of the corresponding quadrangular shape in the circumferential direction and width direction are measured as the length W3 of the corresponding block in the circumferential direction of the tire and the length W4 thereof in the width direction, respectively.

In the pneumatic tire according to the present invention, 1 to 10 two-in-one kerfs 7 per tread block may be formed. When the number of two-in-one kerfs is smaller than one, braking performance on the icy road surface can be degraded, and when the number of two-in-one kerfs exceeds ten, there is a concern that the rigidity of the block can be degraded.

In another embodiment, as shown in FIG. 1, the pneumatic tire according to the present invention may include both an area 30 in which the two-in-one kerf is formed and an area 20 in which the wave-shaped kerf is formed in one tread block 10. The tread block 10 having such a shape may be formed on a center rib of the tire and may be repeatedly arranged in two rows in the circumferential direction of the tire. As shown in FIG. 1, the two rows of blocks may be disposed in the interlocking arrangement in which the two rows of blocks are interlocked by being offset in the circumferential direction of the tire. The area 20 in which the wave-shaped kerf is formed may be formed to extend thinly, the area in which the two-in-one kerf is formed may be formed in a polygonal shape, and an area of the area 20 in which the wave-shaped kerf is formed may be formed to be relatively small with the size of 10% to 90% of the area of the area 30 in which the two-in-one kerf is formed.

When the area 30 in which the two-in-one kerf is formed and the area 20 in which the wave-shaped kerf is formed are formed together in one tread block 10, the two-in-one kerf 7 and the wave-shaped kerf 21 may be formed in parallel to each other, or as shown in FIG. 1, the two-in-one kerfs 7 may be formed in parallel in the width direction of the tire, and the wave-shaped kerf 21 may be formed to be inclined with respect to the width direction of the tire. In this case, an angle β between the two-in-one kerf 7 and the wave-shaped kerf 21 may be formed in the range of 3° to 70°. In this case, a distance d between the two-in-one kerf 7 and the wave-shaped kerf 21 may be 3% to 30% of the total length w3 of the block in the width direction of the tire. The wave-shaped kerf 21 may be formed to extend across the block from one longitudinal groove 3a to the other longitudinal groove 3b. Here, as shown in FIG. 2, the distance d between the two-in-one kerf 7 and the wave-shaped kerf 21 is measured as a distance between an auxiliary line 22 and the branched portion 71c of the two-in-one kerf 7 when the auxiliary line 22 is drawn parallel to the branched portion 71c of the two-in-one kerf 7 on an end portion of the wave-shaped kerf 21 closest to the two-in-one kerf 7. When the distance d between the two-in-one kerf 7 and the wave-shaped kerf 21 is smaller than 3% of the total length W3 of the block in the width direction of the tire, the interval between the kerfs may be too small, thereby degrading rigidity, and when the total length W3 exceeds 30%, the interval between the kerfs may be too large, thereby causing abnormal wear.

### Example

Tires of Comparative Example 1 and Example 1 were manufactured commonly based on the tire size of 225/65R17 101Q and a shoulder block pattern and forming different shapes of the transverse kerfs on the surface of the center block as shown in Table 1 below.

The tire in Comparative Example 2 is a tire in which one linear transverse kerf is formed in one block, and the tire in Comparative Example 3 is a tire in which two linear transverse kerfs more than that of Comparative Example 2 are formed in one block. Example 2 is an example in which the two-in-one kerf according to the present invention is formed in one block.

To verify the above-described effect of the pneumatic tire according to the present invention, block strength and µ value simulation was performed to verify a change in actual vehicle performance through carving on the tire using the following measurement method with respect to the three types of tires, and the results are shown in Table 1 below.

### [Measuring method]

### 1. Actual vehicle evaluation result

At the Winter Tire Outdoor Performance Evaluation Center (Test World) located in Finland, Comparative Example 1 was evaluated using a 100 rating scale by the sensory evaluation of the driver in terms of the characteristics of handling responsiveness, braking performance, and driving performance by allowing one driver to get on a test vehicle for the driving test on the icy road surface and the snowy road surface, which are test courses, using the test vehicle on which a grooving tire forming patterns of Example 1 and Comparative Example 1 below is mounted. The larger the number, the better the performance.

**[Table 1]**

| | Comp arative Exa mple 1 | | | Example 1 | | |
|---|---|---|---|---|---|---|
| Shape of tire | 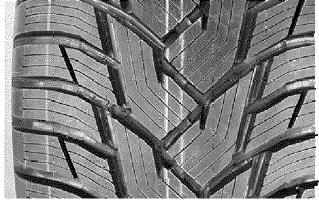 | | | 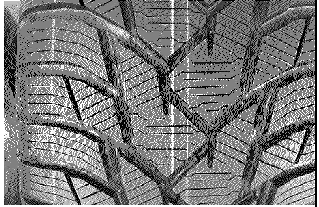 | | |
| Footshape | 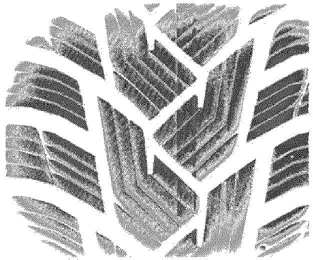 | | | 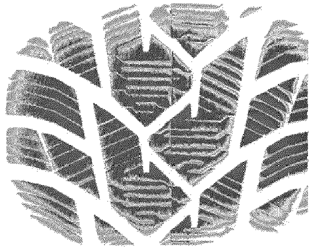 | | |

| | Handling Responsi veness | Braking Performa nce | Driving Performa nce | Handling Responsi veness | Braking Performa nce | Driving Performa nce |
|---|---|---|---|---|---|---|
| Performance on snow | 7 | 100% | 100% | 7 | 100.2% | 104.6% |
| Primary evaluation on ice | 5.5 | 100% | 100% | 6 | 103.3% | 100% |
| Secondary evaluation on ice | 5.5 | 100% | 100% | 6 | 100.5% | 103% |
| Tertiary evaluation on ice | 5 | 100% | 100% | 5.5 | 110.8% | 117.4% |
| Quaternary evaluation on ice | 5 | 100% | 100% | 5.5 | 104.6% | 111.7% |
| Average performance on ice | 5.25 | 100% | 100% | 5.75 | 104.8% | 108% |

As confirmed through the results in Table 1, it was confirmed that in the case of the tire of Example 1 of the present invention, the performance on ice was improved in the range of 5 to 10% by uniformly inducing the tire contact pressure. The ground contact pressure may be uniform when there is little color difference in the footshape.

### 2. Characteristic value analysis results

Simulation of the strengths and µ values of the tread blocks of Example 2 and Comparative Examples 2 and 3.

Finite element analysis was performed for performance comparison between the shapes of Comparative Examples 2 and 3 according to the number of kerfs of the conventional linear kerf shape and Example 2, which is the kerf shape according to the present invention. In general, the performance of a tread pattern is achieved through the ground with the road surface, and the ground contact pressure caused by a load of a vehicle and the friction force generated between the tread pattern and a road surface during braking acts on the tread pattern. Therefore, the friction force was measured by applying the ground contact pressure in the actual vehicle as the boundary condition upon finite element analysis to induce the initial deformation of the tread pattern and simulate the road surface and slippage. In this case, the results of the strength and µ value using which geometric characteristics of the tread pattern and braking performance may be predicted are shown in Table 2 below.

**[Table 2]**

| Items | Tread pattern | Strength (%) | µ value (%) |
|---|---|---|---|
| Comparative Example 2 | 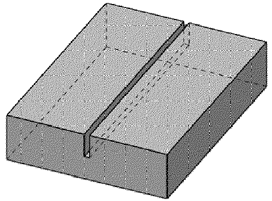 | 100 | 100 |
| Example 2 | 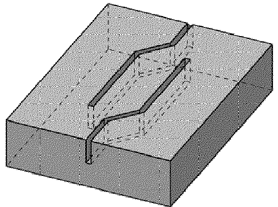 | 97 | 100 |
| Comparative Example 3 | 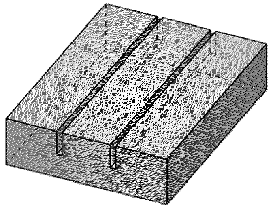 | 90 | 91 |

As confirmed through the results in Table 2, it was confirmed that the block strength of the block of Example 2 was not significantly reduced compared to the block of Comparative Example 2 despite an increase in a kerf edge length. It was confirmed that the tire of Example 2 according to the present invention had a shape in which a rigidity value of the block was not significantly reduced and the maximum friction force was not significantly reduced, and it was possible to not only provide the improvement in the ground contact pressure of the pneumatic tire of the present invention which is difficult to support both the wet and dry road surfaces, and the improvement in performance on ice at the same time, but also maintain performance on snow.

Although specific embodiments of the present invention have been described in detail above, it is for illustrative purposes only and is not intended to limit the scope of the present invention in any way. Those skilled in the art to which the present invention pertains will be able to understand that the present invention can be carried out in other specific forms without changing the technical spirit or essential features of the present invention. The true scope of the present invention is determined by the claims to be described below, and all changes or modifications derived from the claims and equivalent scopes thereof should be construed as being included in the scope of the present invention.

### [DESCRIPTION OF REFERENCE NUMERALS]

1: tire
2: tread
3, 3a, 3b, 3b': longitudinal groove
4, 4a, 4a': center block
5, 5': transverse groove
6a, 6b: shoulder block
20: wave-shaped kerf area
30: two-in-one kerf area
7: two-in-one kerf
71, 72: transverse kerf
71a, 72a: starting portion
71b, 72b: inclined portion
71c, 72c: branched portion
71e, 72e, 8: void portion
EW1, EW2: outer wall
S1, S2: starting point
T1, T2: end point

## Claims

1. A pneumatic tire comprising:
a plurality of tread blocks partitioned by a plurality of longitudinal grooves and a plurality of transverse grooves intersecting the longitudinal grooves;
wherein one or more two-in-one kerfs including a pair of transverse kerfs are formed on a surface of the tread block, and the transverse kerfs start from two outer walls opposite to each other at the same height in a circumferential direction of the tire, are bent at predetermined points, are branched off with a predetermined separation interval and extend, and terminate in a block.

2. The pneumatic tire of claim 1, wherein the transverse kerfs constituting the two-in-one kerf include:
starting portions extending to a predetermined length from the outer wall;
inclined portions formed to be inclined at a predetermined inclined angle with respect to the start portions; and
branched portions extending linearly from the inclined portions, and
the inclined angle (α) between the starting portion and the inclined portion is in a range of 90 to 150°.

3. The pneumatic tire of claim 2, wherein the branched portions of the transverse kerfs are formed as linear or non-linear kerfs.

4. The pneumatic tire of claim 1, wherein thicknesses of the transverse kerfs constituting the two-in-one kerf are the same or different, and the thickness is in a range of 0.2 mm to 1.2 mm.

5. The pneumatic tire of claim 1, wherein depths of the transverse kerfs are in a range of 3 mm to 10 mm.

6. The pneumatic tire of claim 1, wherein a void portion in which a cross-sectional area of a pore is locally expanded is formed in an end portion of the two-in-one kerf in a depth direction or an end portion terminated in the block.

7. The pneumatic tire of claim 1, wherein an interval between the transverse kerfs constituting the two-in-one kerf is in a range of 2 to 8 mm.

8. The pneumatic tire of claim 2, wherein a length of the branched portion is a length in a range of 10% to 70% of a total length of the block in a width direction.

9. The pneumatic tire of claim 1, wherein the two-in-one kerfs are formed as 1 to 10 two-in-one kerfs per block.

10. The pneumatic tire of claim 1, further comprising an area in which a plurality of wave-shaped transverse kerfs are formed on a surface of the block excluding an area in which the two-in-one kerf is formed in one block.

11. The pneumatic tire of claim 10, wherein a distance between the two-in-one kerf and the wave-shaped kerf is a length in a range of 10% to 90% of a length of the block in a circumferential direction of the tire.

12. The pneumatic tire of claim 10, wherein the two-in-one kerf and the wave-shaped kerf are formed to be inclined with respect to each other in the block so that an angle therebetween is in a range of 3° to 70°.
